# EUROPÄISCHE PATENTSCHRIFT

(11) **EP 0 547 407 B1**
(45) Veröffentlichungstag und Bekanntmachung des Hinweises auf die Patenterteilung: **06.03.1996**
(21) Anmeldenummer: 92119947.7
(22) Anmeldetag: 24.11.1992
(51) Int. Cl.: B60T 13/68

(54) **Druckluft-Bremsanlage, insbesondere für Nutzfahrzeuge**
Compressed air brake system, especially for commercial vehicles
Système de freinage à air comprimé, en particulier pour véhicules commerciales

(30) Priorität: 19.12.1991 DE 4141995
(43) Veröffentlichungstag der Anmeldung: 23.06.1993
(73) Patentinhaber: ROBERT BOSCH GMBH, D-70442 Stuttgart (DE)
(72) Erfinder: Stumpe, Werner, Dipl.-Ing., W-7000 Stuttgart 50 (DE)

(56) Entgegenhaltungen:
- EP-A- 0 110 119
- EP-A- 0 163 774
- EP-A- 0 307 579
- DE-A- 4 008 095

## Beschreibung

### Stand der Technik

Die Erfindung geht aus von einer Druckluft-Bremsanlage nach der Gattung des Hauptanspruchs.

Es ist schon eine solche Bremsanlage aus DE 32 19 140 A1 bekannt, bei welcher der elektrische Teil des Bremswertgebers der Ansteuerung eines elektrischen Primärsteuerkreises der Bremsanlage dient, während der pneumatische Teil des Bremswertgebers einem pneumatischen Sekundärsteuerkreis zugeordnet ist. Der Primärsteuerkreis zeichnet sich durch eine schnelle elektropneumatische Bremsdruckregelung aus und gestattet mit entsprechend ausgebildeter Regelelektronik Blockierschutz- und Antriebsschlupf-Regelbetrieb. Der Sekundärsteuerkreis dient dagegen in erster Linie der Ausfallsicherheit der Bremsanlage.

Zur Einsteuerung von Druckluft in einen oder mehrere Bremszylinder der Bremsanlage ist ein Relaisventil in einer Bremsleitung vorgesehen. Eine Steuerkammer des Relaisventils ist sowohl über den Primärsteuerkreis als auch den Sekundärsteuerkreis ansteuerbar, und zwar über ein als Absperrventil ausgebildetes Magnetventil einer Steuerleitung des Sekundärsteuerkreises. Dieses Magnetventil nimmt für Bremsdruckaufbau seine federbetätigte Durchlaßstellung ein. Für Bremsdruckhalten und -abbau ist es von der Regelelektronik in seine magnetbetätigte Sperrstellung schaltbar. Bei einer Blockierschutzregelung kann das Magnetventil unter ungünstigen Bedingungen den Steuerdruck in der Steuerkammer des Relaisventils in der Druckabbau- und -haltephase mehrere Sekunden lang zurückhalten. Trotz eines Abbrechens des Bremsvorganges durch den Fahrzeugführer kann es daher zu einem verzögerten Lösen der Bremsen kommen, nämlich erst dann, wenn die Regelelektronik eine Druckaufbauphase schaltet und sich die Steuerkammer des Relaisventils über die Steuerleitung und die Entlastungsstelle des Bremswertgebers entlüften kann.

### Vorteile der Erfindung

Die erfindungsgemäße Druckluft-Bremsanlage mit den kennzeichnenden Merkmalen des Hauptanspruchs hat demgegenüber den Vorteil, daß bei wirksamer elektropneumatischer Bremsbetätigung die Steuerluft auf kurzem Wege in die Steuerkammer des Relaisventils eingesteuert wird, was für den unverzögerten Bremsdruckaufbau förderlich ist. Beim Fortfall des vom elektrischen Teil des Bremswertgebers erzeugten Bremssignals während einer Blockierschutzregelung wird vorteilhafterweise außerdem ein sofortiges Lösen der Bremse erzielt. Insgesamt wird die Dynamik der Bremsanlage verbessert.

Durch die in den Unteransprüchen aufgeführten Maßnahmen sind vorteilhafte Weiterbildungen und Verbesserungen der im Hauptanspruch angegebenen Druckluft-Bremsanlage möglich.

Besonders vorteilhaft sind die in den beiden Unteransprüchen 2 und 3 offenbarten Ventilanordnungen, weil stets die gleichen Magnetbetätigungen für Bremsdruckhalten und -abbau während des Blockierschutz-Regelbetriebes angesteuert werden, unabhängig davon, ob dieser Regelvorgang bei einer Bremsbetätigung durch den elektrischen oder den pneumatischen Teil des Bremswertgebers erfolgt. Dabei ist bei der Ausgestaltung gemäß Anspruch 3 von Vorteil, daß die Ansteuerung maximal einer Magnetbetätigung erforderlich ist.

Desweiteren ist die im Anspruch 4 angegebene Maßnahme vorteilhaft, weil hierdurch bei der elektropneumatischen Bremsbetätigung der Regelkreis geschlossen wird.

Den gleichen Zweck erfüllt die im Anspruch 5 gekennzeichnete Ausgestaltung bei einer Blockierschutz- und Antriebsschlupfregelung.

### Zeichnung

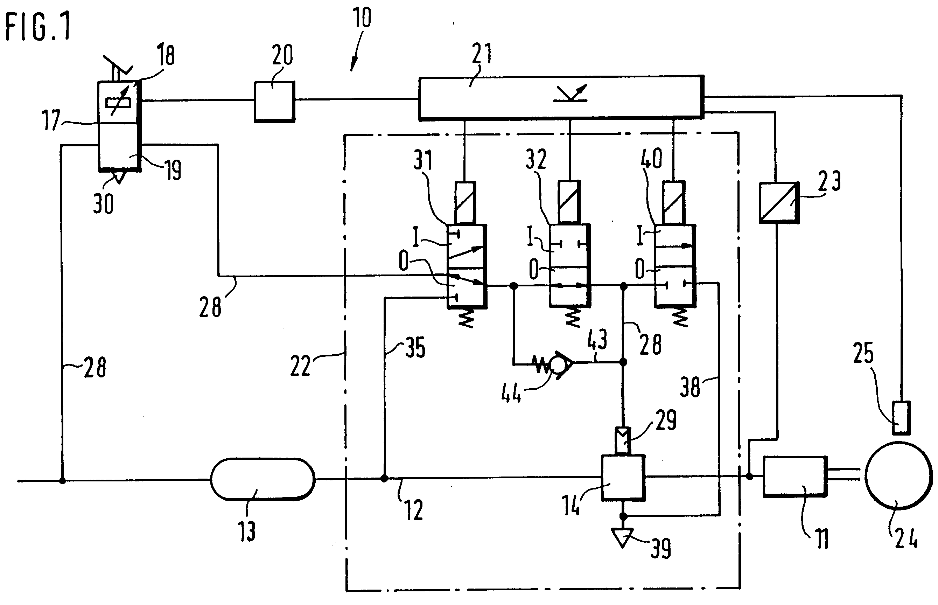

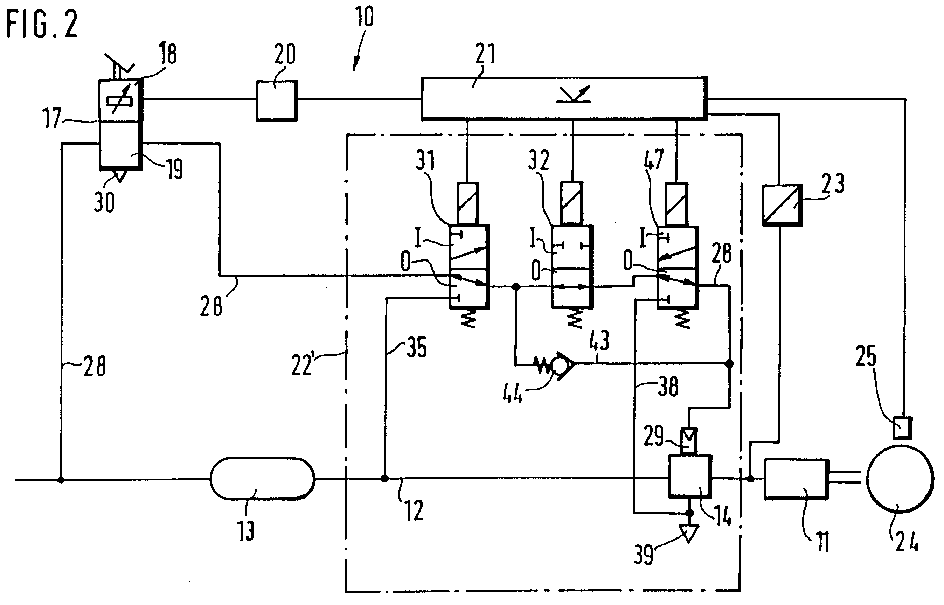

Zwei Ausführungsbeispiele der Erfindung sind in der Zeichnung vereinfacht dargestellt und in der nachfolgenden Beschreibung näher erläutert. Es zeigen Figur 1 einen Ausschnitt eines Funktionsschemas einer elektropneumatisch oder pneumatisch betätigbaren Druckluft-Bremsanlage mit einem durch Magnetventile ansteuerbarem Relaisventil und Figur 2 eine entsprechende Darstellung mit von Figur 1 abweichend ausgewählten Magnetventilen.

### Beschreibung der Ausführungsbeispiele

Das in Figur 1 dargestellte erste Ausführungsbeispiel einer Druckluft-Bremsanlage 10 für Nutzfahrzeuge gibt die Ansteuerung lediglich eines Bremszylinders 11 in einer Bremsleitung 12 wieder. (Die Bremsanlage 10 dient selbstverständlich der Betätigung weiterer, nicht dargestellter Bremszylinder des Nutzfahrzeugs.) In der Bremsleitung 12 befindet sich ein Druckluft-Vorratsbehälter 13. Für die Überwachung der Bremsleitung 12 ist zwischen dem Vorratsbehälter 13 und dem Bremszylinder 11 ein nicht detailliert dargestellten Relaisventil 14 beispielsweise der aus DE 32 40 274 C2 bekannten Art angeordnet.

Die Bremsanlage 10 besitzt einen pedalbetätigbaren, zweikreisigen Bremswertgeber 17 mit einem elektrischen Teil 18 und einem pneumatischen Teil 19. An den elektrischen Teil 18 des Bremswertgebers 17 sind ein Steuergerät 20 und eine Regelelektronik 21 eines elektrischen Primärsteuerkreises für elektropneumatische Bremsbetätigung, Blockierschutz- und Antriebsschlupf-Regelbetrieb angeschlossen. Die Regelelektronik 21 dient der Ansteuerung später beschriebenen Magnetventile einer in der Zeichnung strichpunktiert umrandeten Drucksteuereinheit 22. Außerdem sind an die Regelelektronik 21 ein den Bremsdruck im Bremszylinder 11 erfassender Drucksensor 23 sowie ein das Drehverhalten eines vom Bremszylinder 11 abgebremsten Fahrzeugrades 24 überwachender Drehzahlsensor 25 angeschlossen.

Der pneumatische Teil 19 des Bremswertgebers 17 liegt in einer von der Bremsleitung 12 abgezweigten, aus den Druckluft-Vorratsbehälter 13 versorgten Steuerleitung 28 eines pneumatischen Sekundärsteuerkreises der Bremsanlage 10. Die Steuerleitung 28 führt zu einer Steuerkammer 29 des in die Drucksteuereinheit 22 integrierten Relaisventils 14. Zwischen dem eine Druckentlastungsstelle 30 aufweisenden pneumatischen Teil 19 des Bremswertgebers 17 und der Steuerkammer 29 des Relaisventils 14 sind in der Steuerleitung 28 ein Umschaltventil 31 und stromabwärts von diesem ein Absperrventil 32 angeordnet.

Das Umschaltventil 31 ist als 3/2-Wegeventil ausgebildet. Es besitzt eine federbetätigte Grundstellung 0, in welcher die Steuerleitung 28 durchgeschaltet ist. In einer magnetbetätigten Arbeitsstellung I des Umschaltventils 31 ist dagegen eine Vorratsleitung 35, welche zwischen dem Druckluft-Vorratsbehälter 13 und dem Relaisventil 14 von der Bremsleitung 12 abzweigt, mit dem stromabwärtigen Teil der Steuerleitung 28 verbunden. In der Grundstellung 0 des Umschaltventils 31 ist die Vorratsleitung 35 abgesperrt; gleichfalls abgesperrt ist der stromaufwärtige Teil der Steuerleitung 28 in der Arbeitsstellung I des Umschaltventils 31.

Das Absperrventil 32 besitzt die Bauform eines 2/2-Wegeventils. In seiner federbetätigten Durchlaßstellung 0 schaltet es die Steuerleitung 28 durch; in der magnetbetätigten Sperrstellung I ist die Steuerleitung 28 dagegen unterbrochen.

Zwischen dem Absperrventil 32 und dem Relaisventil 14 zweigt von der Steuerleitung 28 eine Entlüftungsleitung 38 ab, welche zu einer Druckentlastungsstelle 39 des Relaisventils 14 führt. In der Entlüftungsleitung 38 ist ein Auslaßventil 40 der Drucksteuereinheit 22 angeordnet. Das Auslaßventil 40 ist als 2/2-Wegeventil ausgebildet: In seiner federbetätigten Sperrstellung 0 unterbricht es die Entlüftungsleitung 28, in der magnetbetätigten Durchlaßstellung I ist die Entlüftungsleitung 38 durchgeschaltet.

Außerdem ist in der Drucksteuereinheit 22 eine Bypassleitung 43 integriert. Diese überbrückt das Absperrventil 32 in der Steuerleitung 28, d.h. die Bypassleitung 43 ist einerseits zwischen dem Umschaltventil 31 und dem Absperrventil 32 und andererseits zwischen dem Absperrventil 32 und der Steuerkammer 29 des Relaisventils 14 an die Steuerleitung 28 angeschlossen. In der Bypassleitung 43 ist ein Rückschlagventil 44 angeordnet, welches in Strömungsrichtung von der Steuerkammer 29 des Relaisventils 14 zum Umschaltventil 31 öffnet.

### Wirkungsweise

Bei einer Betätigung des Bremswertgebers 17 werden im elektrischen Teil 18 ein elektrisches Bremssignal, im pneumatischen Teil 19 ein pneumatisches Bremssignal erzeugt. Das schnellere elektrische Signal wird im Steuergerät 20 und in der Regelelektronik 21 verarbeitet, welche das Umschaltventil 31 in die Arbeitsstellung I schaltet. Unter Umgehung des pneumatischen Teils 19 des Bremswertgebers 17 wird nun dem Vorratsbehälter 13 Druckluft entnommen und durch die Vorratsleitung 35 in den auf das Umschaltventil 31 folgenden, stromabwärtigen Teil der Steuerleitung 28 eingesteuert. Die Regelelektronik 21 bemißt den in die Steuerkammer 29 des Relaisventils 14 einzusteuernden Druck entsprechend dem Signal des elektrischen Teils 18 des Bremswertgebers 17 durch entsprechendes Schalten des Absperrventils 32 in der Steuerleitung 28 und des Auslaßventils 40 in der Entlüftungsleitung 38. Dabei nehmen für Bremsdruckaufbau das Absperrventil 32 seine Durchlaßstellung 0 und das Auslaßventil 40 seine Sperrstellung 0 ein. Für Druckhalten wird das Absperrventil 32 in seine Sperrstellung I geschaltet, während das Auslaßventil 40 in der Sperrstellung 0 verbleibt. Für Druckabbau werden das Absperrventil 32 in die Sperrstellung I und das Auslaßventil 40 in die Durchlaßstellung I geschaltet.

Der vom Absperrventil 32 und vom Auslaßventil 40 entsprechend dem elektrischen Bremssignal ausgesteuerte Druck belastet im Relaisventil 14 einen Steuerkolben für die Betätigung eines Doppelsitzventils, welches beiderseits einer Abschlußstellung die Verbindung zwischen dem Druckluft-Vorratsbehälter 13 und dem Bremszylinder 11 oder zwischen diesem und der Druckentlastungsstelle 39 überwacht. Der vom Relaisventil 14 ausgesteuerte Bremsdruck wiederum wird vom Drucksensor 23 überwacht und bei Abweichungen von der Regelelektronik 21 durch entsprechende Schaltsignale an das Absperrventil 32 und das Auslaßventil 40 korrigiert.

Droht bei einer Bremsung das Fahrzeugrad 24 zu blockieren, so wird dieses von der Regelelektronik 21 aufgrund der Signale des Drehzahlsensors 25 erkannt. Die Regelelektronik 21 schaltet das Absperrventil 32 und das Auslaßventil 40 entsprechend vorgegebenen Regelalgorythmen zur Erzeugung von Phasen für Bremsdruckabbau, Druckhalten und Druckaufbau im Bremszylinder 11, um das Fahrzeugrad 24 zu stabilisieren.

Tritt beim Anfahren und Beschleunigen des Nutzfahrzeugs am Fahrzeugrad 24 unzulässig großer Antriebsschlupf auf, so wird dies von der Regelelektronik 21 ebenfalls aufgrund der Signale des Drehzahlsensors 25 erkannt. Die Regelelektronik 21 schaltet dann das Umschaltventil 31 in die Arbeitsstellung I, um die Steuerleitung 28 mit Druckluft zu versorgen. Außerdem werden, wie vorstehend beschrieben, das Absperrventil 32 und das Auslaßventil 40 geschaltet, um im Bremszylinder 11 Phasen für Bremsdruckaufbau, Druckhalten und Druckabbau zu erzeugen.

Die Drucksteuereinheit 22 kann Verwendung finden in der Bremsanlage eines Zugfahrzeugs (wie dargestellt) und/oder auf einem Anhängefahrzeug. Dabei ist eine Ansteuerung des Relaisventils 14 auch dann möglich, wenn kein elektrisches Bremssignal vorliegt, sei es, daß das Zugfahrzeug für die auf dem Anhängefahrzeug befindliche Drucksteuereinheit 22 kein elektrisches Signal zur Verfügung stellt, oder sei es, daß die Übertragung des elektrischen Signals nicht möglich ist, was vom Steuergerät 20 und/oder der Regelelektronik 21 erkannt wird. Die Regelelektronik 21 steuert daher das Umschaltventil 31 nicht an, d.h. dieses verbleibt in der Grundstellung 0 ebenso wie die Ventile 32 und 40. Trotzdem ist die Bremsfähigkeit der Druckluft-Bremsanlage 10 gegeben, und zwar über den auch als Rückhaltkreis bezeichneten pneumatischen Sekundärsteuerkreis. Das bei einer Betätigung des Bremswertgebers 17 vom pneumatischen Teil 19 ausgesteuerte, pneumatische Bremssignal wird durch die Steuerleitung 28 in die Steuerkammer 29 des Relaisventils 14 eingesteuert und der Bremszylinder 11 vom Relaisventil 14 mit Bremsdruck beaufschlagt.

Tritt bei einer derartig gesteuerten Bremsung Blockiergefahr am Fahrzeugrad 24 auf, so schaltet die Regelelektronik 21, wie weiter oben beschrieben, das Absperrventil 32 und das Auslaßventil 40 zur Erzeugung von Phasen für Bremsdruckabbau, Druckhalten und Druckaufbau im Bremszylinder 11. Dabei kann sich eine auf Druckabbau folgende Phase für Druckhalten, in welcher das Absperrventil 32 seine Sperrstellung I und das Auslaßventil 40 seine Sperrstellung 0 einnehmen, über mehrere Sekunden Dauer erstrecken, wenn ein extrem niedriger Reibwert der Straßenoberfläche und ein relativ großes Trägheitsmoment des Fahrzeugrades 24 dessen Beschleunigung verzögert. Wird während einer solchen Druckhaltephase die Bremsung abgebrochen, so ist dennoch ein unerzügliches Lösen der Bremse möglich, weil die Steuerluft aus der Steuerkammer 29 des Relaisventils 14 durch die Bypassleitung 43 unter Überwindung des Rückschlagventils 44, durch das seine Grundstellung 0 einnehmende Umschaltventil 31 und die Steuerleitung 28 zur Druckentlastungsstelle 30 des pneumatischen Bremswertgeberteils 19 abströmen kann.

Das in Figur 2 dargestellte zweite Ausführungsbeispiel der Druckluft-Bremsanlage 10 unterscheidet sich vom ersten im wesentlichen dadurch, daß eine Drucksteuereinheit 22' mit einem stromabwärts des Absperrventils 32 in der Steuerleitung 28 angeordneten, zweiten Umschaltventil 47 ausgestattet ist, welches die Funktion des Auslaßventils 40 des ersten Ausführungsbeispiels mit übernimmt. Das zweite Umschaltventil 47 ist ein 3/2-Wegeventil. In seiner federbetätigten Grundstellung 0 schaltet es die Steuerleitung 28 zur Steuerkammer 29 des Relaisventils 14 durch. In seiner magnetbetätigten Arbeitsstellung I ist der steuerkammerseitige Teil der Steuerleitung 28 mit der zur Druckentlastungsstelle 39 des Relaisventils 14 führenden Entlüftungsleitung 38 verbunden. In der Grundstellung 0 des zweiten Umschaltventils 47 ist die Verbindung der Entlüftungsleitung 38 gelöst, in der Arbeitsstellung I ist die Verbindung der Steuerleitung 28 unterbrochen. Außerdem überbrückt bei diesem Ausführungsbeispiel die Bypassleitung 43 sowohl das Absperrventil 32 als auch das zweite Umschaltventil 47 in der Steuerleitung 28.

Mit dem Absperrventil 32 und dem zweiten Umschaltventil 47 sind im Bremszylinder 11 Phasen für Druckaufbau, Druckhalten und Druckabbau schaltbar. Für Bremsdruckaufbau ist keine elektrische Ansteuerung des Absperrventils 32 und des zweiten Umschaltventils 47 erforderlich. Für Druckhalten ist lediglich das Absperrventil 32 in die magnetbetätigte Sperrstellung I zu schalten. Für Druckabsenken bedarf es nur des Schaltens des zweiten Umschaltventils 47 in die magnetbetätigte Arbeitsstellung I.

Beim zweiten Ausführungsbeispiel ist elektropneumatische oder rein pneumatische Bremsbetätigung sowie Blockierschutz- und Antriebsschlupf-Regelbetrieb in dem ersten Ausführungsbeispiel entsprechender Weise möglich.

## Patentansprüche

1. Druckluft-Bremsanlage (10), insbesondere für Nutzfahrzeuge, mit einem Steuergerät (20) und einer Regelelektronik (21) für Bremsbetätigung, Blockierschutz- und Antriebsschlupf-Regelbetrieb, mit einer durch ein Relaisventil (14) überwachbaren Bremsleitung (12) zwischen einem Druckluft-Vorratsbehälter (13) und einem Bremszylinder (11) für ein zu bremsendes Fahrzeugrad (24), mit wenigstens einem, von der Regelelektronik (21) für Phasen von Bremsdruckaufbau, -halten und -abbau schaltbaren Magnetventil in einer aus dem Druckluft-Vorratsbehälter (13) versorgten und an eine Steuerkammer (29) des Relaisventils (14) angeschlossenen Steuerleitung (28) und mit einem pedalbetätigbaren, zweikreisigen Bremswertgeber (17), dessen einer, elektrischer Teil (18) mit dem Steuergerät (20) und der Regelelektronik (21) zum Schalten des wenigstens einen Magnetventils verbunden ist, während dessen anderer, eine Druckentlastungsstelle (30) aufweisender, pneumatischer Teil (19) in der Steuerleitung (28) zwischen den Druckluftvorratsbehälter (13) und dem wenigstens einen Magnetventil angeordnet ist, dadurch gekennzeichnet, daß in der Steuerleitung (28) zwischen dem Bremswertgeber (17) und dem wenigstens einen Magnetventil (Absperrventil 32) ein an die Regelelektronik (21) angeschlossenes Umschaltventil (31) angeordnet ist, das in einer federbetätigten Grundstellung (0) die Steuerleitung (28) durchschaltet, in einer magnetbetätigten Arbeitsstellung (I) eine aus dem Druckluft-Vorratsbehälter (13) versorgte Vorratsleitung (35) mit dem stromabwärtigen Teil der Steuerleitung (28) verbindet, und daß das wenigstens eine Magnetventil (Absperrventil 32) von einer Bypassleitung (43) mit einem in Strömungsrichtung von der Steuerkammer (29) des Relaisventils (14) zum Umschaltventil (31) öffnenden Rückschlagventil (44) überbrückt ist.

2. Druckluft-Bremsanlage nach Anspruch 1, dadurch gekennzeichnet, daß die Bypassleitung (43) ein Absperrventil (32) mit federbetätigter Durchlaßstellung (0) und magnetbetätigter Sperrstellung (I) überbrückt, und daß von der Steuerleitung (28) zwischen dem Absperrventil (32) und der Steuerkammer (29) des Relaisventils (14) eine zu einer Druckentlastungsstelle (39) führende Entlüftungsleitung (38) mit einem Auslaßventil (40) abzweigt, welches eine federbetätigte Sperrstellung (0) und eine magnetbetätigte Durchlaßstellung (I) aufweist.

3. Druckluft-Bremsanlage nach Anspruch 1, dadurch gekennzeichnet, daß die Bypassleitung (43) ein Absperrventil (32) mit federbetätigter Durchlaßstellung (0) und magnetbetätigter Sperrstellung und stromabwärts vom Absperrventil (32) ein zweites Umschaltventil (47) überbrückt, mit dem in einer federbetätigten Grundstellung (0) die Steuerleitung (28) durchgeschaltet, in einer magnetbetätigten Arbeitsstellung (I) die Steuerkammer (29) des Relaisventils (14) durch eine Entlüftungsleitung (38) mit einer Druckentlastungsstelle (39) verbunden ist.

4. Druckluft-Bremsanlage nach Anspruch 1, dadurch gekennzeichnet daß ein den vom Relaisventil (14) in der Bremsleitung (12) ausgesteuerten Bremsdruck überwachender Drucksensor (23) an die Regelelektronik (21) angeschlossen ist.

5. Druckluft-Bremsanlage nach Anspruch 1, dadurch gekennzeichnet, daß ein das Raddrehverhalten des abgebremsten Fahrzeugrades (24) überwachender Drehzahlsensor (25) an die Regelelektronik (21) angeschlossen ist.

## Claims

1. Compressed air brake system (10), especially for utility vehicles, having a control unit (20) and an electronic adjustment device (21) for actuating brakes, and operating anti-lock and traction control systems, having a brake line (12), which can be monitored by a relay valve (14), between a compressed air reservoir vessel (13) and a brake cylinder (11) for a vehicle wheel (24) to be braked, having at least one solenoid valve, which can be switched by the electronic adjustment device (21) for phases of brake pressure increase, maintenance and reduction, in a control line (28) which is supplied from the compressed air reservoir vessel (13) and is connected to a control chamber (29) of the relay valve (14), and having a pedal-actuated, dual-circuit brake value sensor (17), the one, electrical component (18) of which is connected to the control unit (20) and the electronic adjustment device (21) in order to switch the at least one solenoid valve, while its other, pneumatic component (19), which has a pressure release point (30), is arranged in the control line (28) between the compressed air reservoir vessel (13) and the at least one solenoid valve, characterized in that a change-over valve (31) which is connected to the electronic adjustment device (21) is arranged in the control line (28) between the brake value sensor (17) and the at least one solenoid valve (stop valve 32), which change-over valve (31) connects through the control line (28) in a spring-actuated basic position (0), and connects a reservoir line (35), supplied from the compressed air reservoir vessel (13), to the downstream component of the control line (28) in a magnet-actuated operating position (I), and in that the at least one solenoid valve (stop valve 32) is bypassed by a bypass line (43) with a non-return valve (44) which opens in the direction of flow from the control chamber (29) of the relay valve (14) to the change-over valve (31).

2. Compressed air brake system according to Claim 1, characterized in that the bypass line (43) bypasses a stop valve (32) with spring-actuated flow position (0) and magnet-actuated blocking position (I), and in that an air release line (38) which leads to a pressure relief point (39) and has an outlet valve (40), which has a spring-actuated blocking position (0) and a magnet-actuated flow position (I), branches off from the control line (28) between the stop valve (32) and the control chamber (29) of the relay valve (14).

3. Compressed air brake system according to Claim 1, characterized in that the bypass line (43) bypasses a stop valve (32) with spring-actuated flow position (0) and magnet-actuated blocking position and, downstream of the stop valve (32), bypasses a second change-over valve (47) with which the control line (28) is connected through in a spring-actuated basic position (0), and, in a magnet-actuated operating position (I), the control chamber (29) of the relay valve (14) is connected to a pressure relief point (39) by an air release line (38).

4. Compressed air brake system according to Claim 1, characterized in that a pressure sensor (23) which monitors the brake pressure which is applied to the braked line (12) by the relay valve (14) is connected to the electronic adjustment device (21).

5. Compressed air brake system according to Claim 1, characterized in that a rotational speed sensor (25) which monitors the wheel speed behaviour of the braked vehicle wheel (24) is connected to the electronic adjustment device (21).

## Revendications

1. Installation de frein à air comprimé (10), notamment pour véhicules utilitaires, comportant un appareil de commande (20) et un circuit électronique de régulation (21) pour actionner les freins, travaillant en mode de régulation antiblocage et antipatinage, installation comprenant une conduite de frein (12) surveillée par une vanne à relais (14), entre un réservoir d'alimentation en air comprimé (13) et un cylindre de frein (11) associés à une roue de véhicule (24) à freiner, au moins une électrovanne commutée par le circuit électronique de régulation (21) pour les phases de montée de maintien et de réduction de pression, dans une conduite de commande (28) alimentée par le réservoir d'air comprimé (13) et reliée à une chambre de commande (29) de la vanne à relais (14) ainsi qu'un capteur de puissance de freinage (17), à deux circuits, actionné par la pédale, dont la partie électrique (18) est reliée à l'appareil de commande (20) et au circuit électronique de régulation (21) pour commuter au moins une électrovanne, alors que sa partie pneumatique (19) comprenant un point de décharge de pression (30) est montée dans la conduite de commande (28) entre le réservoir d'air comprimé (13) et au moins une électrovanne, caractérisée par une vanne de commutation (31) équipant la conduite de commande (28) entre le capteur de puissance de freinage (17) et au moins une électrovanne (vanne d'arrêt 32), cette vanne de commutation reliée au circuit électronique de régulation (21) et rendant passante la conduite de commande (28) pour sa position de base (O) chargée par ressort alors que dans sa position active (I) actionnée par l'électroaimant, relie la conduite d'alimentation (35) venant du réservoir d'air comprimé (13) à la partie avale de la conduite de commande (28), et en ce qu'au moins cette électrovanne (vanne d'arrêt 32) est court-circuitée par une conduite de dérivation (43) munie d'un clapet anti-retour (44) qui s'ouvre dans le sens de passage allant de la chambre de commande (29) de la vanne à relais (14) à la vanne de commutation (31).

2. Installation de frein à air comprimé selon la revendication 1, caractérisée en ce que la conduite de dérivation (43) court-circuite une vanne d'arrêt (32) à position passante (O) chargée par ressort et position d'arrêt (I) actionnée par l'électroaimant, et en ce que la conduite de commande (28), entre la vanne d'arrêt (32) et la chambre de commande (29) de la vanne à relais (14) est reliée à une conduite d'évacuation d'air (38) munie d'une vanne de sortie (40) et aboutissant à un point de décharge de pression (39), cette vanne de sortie ayant une position de fermeture (O) chargée par ressort et une position passante (I) actionnée par l'électroaimant.

3. Installation de frein à air comprimé selon la revendication 1, caractérisée en ce que la conduite de dérivation (43) court-circuite une vanne d'arrêt (32) à position passante (O) chargée par ressort et position d'arrêt actionnée par l'électroaimant, et en aval de cette vanne d'arrêt (32), une seconde vanne de commutation (47) en aval de la vanne d'arrêt (32), vanne de commutation qui pour sa position de base (O) chargée par ressort rend passante la conduite de commande (28) et la position active (I) actionnée par l'électroaimant, relie la chambre de commande (29) de la vanne à relais (14) à un point de décharge de pression (39) par une conduite d'évacuation d'air (38).

4. Installation de frein à air comprimé selon la revendication 1, caractérisée par un capteur de pression (23) surveillant la pression de frein commandée par la vanne à relais (14) dans la conduite de frein (12), ce capteur étant relié au circuit électronique de régulation (21).

5. Installation de frein à air comprimé selon la revendication 1, caractérisée par un capteur de vitesse de rotation (25) surveillant le comportement en rotation de la roue de véhicule (24), freinée, ce capteur étant relié au circuit électronique de régulation (21).
